# EUROPÄISCHE PATENTANMELDUNG

(11) **EP 4 520 575 A1**
(43) Veröffentlichungstag der Anmeldung: **12.03.2025**
(21) Anmeldenummer: 24188315.6
(22) Anmeldetag: 12.07.2024
(51) Int. Cl.: B60L 7/18, B60L 15/20, B60T 8/17, B62D 59/04

(54) **STEUERN EINES AUFLIEGERS MIT EINER ELEKTRISCHEN ANTRIEBSMASCHINE**

(30) Priorität: 15.08.2023 DE 102023121783
(71) Anmelder: ZF CV Systems Global GmbH, 3006 Bern (CH)
(72) Erfinder: MEYER, Tim, 30171 Hannover (DE); SCHOWE, Christoph, 30989 Gehrden (DE)
(74) Vertreter: Ohlendorf, Henrike

(57) **Zusammenfassung**

Ein Auflieger (110) ist dazu eingerichtet, von einer Zugmaschine (105) gezogen zu werden und umfasst ein Rad und eine elektrische Antriebsmaschine (205) zur Bereitstellung eines Antriebsmoments an dem Rad. Eine Steuervorrichtung (200) für einen solchen Auflieger (110) umfasst eine Schnittstelle (220, 225) zur Verbindung mit der Zugmaschine (105) und ist dazu eingerichtet, auf der Basis eines über die Schnittstelle (220, 225) übertragenen Signals einen Fahrerwunsch zur Traktionsunterstützung zu bestimmen und die Antriebsmaschine (205) in Abhängigkeit des Fahrerwunschs zu steuern.

## Beschreibung

Die vorliegende Erfindung betrifft die Steuerung eines Aufliegers, der dazu eingerichtet ist, von einem Zugfahrzeug gezogen zu werden. Insbesondere betrifft die Erfindung die Steuerung eines Aufliegers mit einer elektrischen Antriebsmaschine.

Ein Auflieger ist dazu eingerichtet, von einer Zugmaschine gezogen zu werden, sodass die Zugmaschine und der Auflieger zusammen einen Sattelzug bilden. Der Auflieger kann eine elektrische Antriebsmaschine umfassen, die auf ein Rad an einer Achse des Aufliegers wirkt. Die elektrische Antriebsmaschine kann angesteuert werden, um die Bewegung des Sattelzugs in vorbestimmten Fahrsituationen zu unterstützen.

Es wurde vorgeschlagen, ein durch die elektrische Antriebsmaschine bereitgestelltes Drehmoment automatisch in Abhängigkeit einer Zugkraft zu steuern, die zwischen der Zugmaschine und dem Auflieger wirkt. Ein Königszapfen, der die beiden Fahrzeugteile miteinander verbindet, kann hierzu mit einem Sensor zur Bestimmung der Zugkraft ausgestattet werden.

Bisher bekannte Steuerungen einer solchen elektrischen Antriebsmaschine an einem Auflieger arbeiten vor allem bei einer Überlandfahrt der Zugmaschine zu und können beispielsweise bei Bergfahrt unterstützen und bei Talfahrt eine Rekuperation steuern. Eine der vorliegenden Erfindung zu Grunde liegende Aufgabe besteht in der Bereitstellung einer Technik zur verbesserten Unterstützung eines Aufliegers mittels einer elektrischen Antriebsmaschine. Die Erfindung löst diese Aufgabe mittels der Gegenstände der unabhängigen Ansprüche. Unteransprüche geben bevorzugte Ausführungsformen wieder.

Ein Auflieger ist dazu eingerichtet, von einer Zugmaschine gezogen zu werden und umfasst ein Rad und eine elektrische Antriebsmaschine zur Bereitstellung eines Antriebsmoments an dem Rad. Eine Steuervorrichtung für einen solchen Auflieger umfasst eine Schnittstelle zur Verbindung mit der Zugmaschine und ist dazu eingerichtet, auf der Basis eines über die Schnittstelle übertragenen Signals einen Fahrerwunsch zur Traktionsunterstützung zu bestimmen und die Antriebsmaschine in Abhängigkeit des Fahrerwunschs zu steuern.

Mittels der Steuervorrichtung kann die Traktionsunterstützung am Auflieger durch einen Fahrer der Zugmaschine manuell aktiviert werden. Der Fahrer kann selbst entscheiden, ob er eine Traktionsunterstützung wünscht und er kann die Traktionsunterstützung flexibel in verschiedenen Situationen einsetzen. Beispielsweise kann er die Traktionsunterstützung beim Anfahren des Sattelzugs aktivieren, etwa weil er einen niedrigen Reibwert eines Untergrunds erkennt.

Die elektrische Antriebsmaschine kann zur Bereitstellung eines vorbestimmten Drehmoments angesteuert werden, das unabhängig von einer Drehzahl sein kann. Das Drehmoment kann auch auf einen Wert begrenzt werden, der von dem Fahrer vorbestimmt werden kann. Es ist auch möglich, das Drehmoment automatisch in Abhängigkeit eines Fahrparameters des Aufliegers zu begrenzen, beispielsweise in Abhängigkeit von einer Fahrgeschwindigkeit.

Um ein versehentliches Aktivieren der Traktionsunterstützung zu verhindern, kann eine Randbedingung vorgegeben sein, die erfüllt sein muss, um die Traktionsunterstützung zu aktivieren. So kann bestimmt werden, dass während der Übertragung des Signals eine Feststellbremse des Aufliegers aktiviert ist. Die Feststellbremse kann in Abhängigkeit eines von der Zugmaschine übertragenen Signals aktiviert sein und ein Aktivierungszustand der Feststellbremse kann in Abhängigkeit dieses Signals bestimmt werden. Das Signal kann über dieselbe Schnittstelle übermittelt werden wie das auf den Fahrerwunsch hinweisende Signal.

Es ist möglich, dass die Traktionsunterstützung erst gesteuert wird, wenn die Feststellbremse gelöst wird. So kann eine drei-Schritt-Aktivierung der Traktionsunterstützung erfolgen, indem zuerst die Feststellbremse aktiviert wird, dann das Signal übertragen wird und danach die Feststellbremse gelöst wird. Der Vorgang kann innerhalb eines vorbestimmten Zeitfensters ablaufen, sodass ein zu langsamer und/oder zu rascher Ablauf die Traktionsunterstützung nicht auslösen kann.

In einer Ausführungsform übermittelt die Schnittstelle ein Bremssignal und der Fahrerwunsch wird auf der Basis einer vorbestimmten Sequenz des Bremssignals bestimmt. Beispielsweise kann die Sequenz eine mehrfache Betätigung der Bremse umfassen, wobei vorgegeben sein kann, in welcher Zeit wie viele Betätigungen erfolgen müssen, um den Fahrerwunsch zu erkennen. Es kann auch eine Sequenz mit unterschiedlich langen Betätigungen erkannt werden, beispielsweise eine kurze, eine lange und eine kurze Betätigung. Eine Minimal- und eine Maximalzeit, zwischen denen eine Dauer einer kurzen bzw. langen Betätigung liegen soll, können vorbestimmt sein. In einer Ausführungsform wird an Bord der Zugmaschine eine Bestätigung ausgegeben, wenn das Signal erkannt wurde. Optional wird eine Bestätigung ausgegeben, wenn der Fahrerwunsch erkannt wurde.

Die Schnittstelle kann drahtgebunden sein. Insbesondere kann eine Standardschnittstelle verwendet werden, die zwischen einer Zugmaschine und einem Auflieger vorgesehen ist, um beispielsweise eine Signal- oder Beleuchtungsanlage des Aufliegers zu steuern. Beispielhafte Definitionen für eine solche Standardschnittstelle sind in ISO 1724 oder ISO 11446 zu finden. Insbesondere wenn der Fahrerwunsch auf der Basis des Bremssignals erkannt wird, kann die ohnehin erforderliche Schnittstelle für die Steuerung der Traktionsunterstützung mitbenutzt werden. Eine Funktion der bestehenden Schnittstelle kann dadurch nicht beeinträchtigt sein.

Die Schnittstelle kann separat von einer Standardschnittstelle zwischen der Zugmaschine und dem Auflieger ausgeführt sein. Dabei kann eine drahtgebundene oder eine drahtlose Schnittstelle verwendet werden. Beispielhafte drahtlose Schnittstellen, die hierfür eingesetzt werden können, umfassen WiFi, Bluetooth, NFC oder Mobilfunk. Beispielsweise kann mittels eines Mobiltelefons (Smartphone) drahtlos eine Funktion des Aufliegers gesteuert werden. Es ist möglich, dass über eine drahtgebundene Schnittstelle das Signal mittels eines am Auflieger angebrachten Bedienelements gesteuert wird. Ein beispielhaftes Bedienelement, das hierfür verwendet werden kann, ist unter der Bezeichnung Smartboard erhältlich. Andere drahtgebundene Techniken umfassen CAN oder LIN. Die Schnittstelle kann zur Übertragung von Fahrparametern eingerichtet sein (Telematik).

Es ist besonders bevorzugt, dass die Traktionsunterstützung in Abhängigkeit einer zwischen der Zugmaschine und dem Auflieger wirkenden Zugkraft gesteuert wird. Die Zugkraft kann mittels eines Kraftsensors bestimmt werden, der im Bereich eines Königszapfens (Kingpin) angebracht sein kann, der den Auflieger zugkraftschlüssig mit der Zugmaschine verbindet.

Nach einem weiteren Aspekt der vorliegenden Erfindung umfasst ein Auflieger eine hierin beschriebene Steuervorrichtung. Ein solcher Auflieger kann auch Sattelauflieger, Semitrailer oder Trailer genannt werden. Der Auflieger kann mittels eines Königszapfens mit einer Sattelplatte der Zugmaschine verbunden werden. Ein Teil des Gewichts des Aufliegers lastet dann auf der Zugmaschine. Der Auflieger ist üblicherweise mehrachsig und kann insbesondere zwei oder drei Achsen aufweisen.

Eine Zugmaschine ist dazu eingerichtet, einen Auflieger zu ziehen, der ein Rad umfasst, an dem mittels einer elektrischen Antriebsmaschine ein Antriebsmoment bereitgestellt werden kann. Dabei weist die Zugmaschine ein dediziertes Bedienelement zur Bereitstellung eines Signals auf, das auf einen Fahrerwunsch nach Traktionsunterstützung mittels der elektrischen Antriebsmaschine hinweist. Das dedizierte Bedienelement kann beispielsweise einen Schalter, einen Taster oder einen Hebel umfassen. Optional ist das Bedienelement dazu eingerichtet, eine Bestätigung über die Bereitstellung des Signals am Zugfahrzeug bereitzustellen. In einer weiteren Ausführungsform kann auch ein dynamisches Bedienelement zu diesem Zweck verwendet werden, beispielsweise eine Bedienfläche auf einem berührungsempfindlichen Bildschirm.

Ein Sattelzug umfasst einen hierin beschriebenen Auflieger und eine Zugmaschine, die dazu eingerichtet ist, den Auflieger zu ziehen. Die Zugmaschine kann insbesondere ein hierin beschriebenes Bedienelement zur Bereitstellung eines Signals umfassen, das auf einen Fahrerwunsch zur Traktionsunterstützung am Auflieger hinweist.

Ein Auflieger ist dazu eingerichtet, von einer Zugmaschine gezogen zu werden und umfasst ein Rad und eine elektrische Antriebsmaschine zur Bereitstellung eines Antriebsmoments an dem Rad. Ein Verfahren zum Steuern eines derartigen Aufliegers umfasst Schritte des Bestimmens eines über eine Schnittstelle von der Zugmaschine an den Auflieger übermittelten Signals, des Bestimmens eines Fahrerwunschs zur Traktionsunterstützung auf der Basis des Signals, und des Steuerns der Antriebsmaschine in Abhängigkeit des Fahrerwunschs.

Das Verfahren kann mittels einer hierin beschriebenen Steuervorrichtung teilweise oder vollständig ausgeführt werden. Dazu kann die Steuervorrichtung eine insbesondere elektronisch ausgeführte Verarbeitungseinrichtung umfassen, die beispielsweise als programmierbarer Mikrocomputer oder Mikrocontroller ausgebildet ist. Das Verfahren kann in Form eines Computerprogrammprodukts mit Programmcodemitteln vorliegen. Das Computerprogrammprodukt kann auch auf einem computerlesbaren Datenträger abgespeichert sein. Merkmale oder Vorteile des Verfahrens können auf die Vorrichtung übertragen werden oder umgekehrt.

Die Traktionsunterstützung kann in Abhängigkeit einer Achslast an einer das Rad tragenden Achse bereitgestellt werden. Dadurch kann verhindert werden, dass die Antriebsmaschine mehr Drehmoment bereitstellt als das Rad an einen Untergrund übermitteln kann, sodass es durchdreht. Je größer die Achslast ist, desto größer kann das bereitgestellte Drehmoment sein.

In einer weiteren Ausführungsform wird zur Traktionsunterstützung eine Liftachse des Aufliegers aktiviert. Eine Achslast auf eine Achse, die das antreibbare Rad trägt, kann dadurch erhöht werden.

Die Traktionsunterstützung kann aus einem von mehreren vorbestimmten Gründen automatisch beendet werden. Beispielsweise kann die Traktionsunterstützung deaktiviert werden, falls eine vorbestimmte Unterstützungsdauer abläuft, falls eine Fahrgeschwindigkeit einen vorbestimmten Schwellenwert erreicht, falls eine Antriebsschlupfregelung der Zugmaschine deaktiviert wird und/oder falls ein fahrergesteuerter Bremsdruck einen vorbestimmten Schwellenwert erreicht.

Die Fahrgeschwindigkeit des Aufliegers kann mittels eines Sensors bestimmt werden, der beispielsweise eine Drehzahl eines Rads des Aufliegers erfasst, das bevorzugt von dem angetriebenen Rad verschieden ist. An einem Rad einer aktivierten Liftachse kann kein auf die Geschwindigkeit hinweisendes Drehsignal bestimmt werden. Ein anderer Sensor, der beispielsweise auf der Basis einer Kamera arbeitet, der ein Umfeld des Aufliegers abtastet, insbesondere einen Untergrund, kann ebenfalls verwendet werden. In noch einer weiteren Ausführungsform kann ein Geschwindigkeitssignal von der Zugmaschine erfasst werden. Es kann davon ausgegangen werden, dass eine Fahrgeschwindigkeit der Zugmaschine im Wesentlichen einer Fahrgeschwindigkeit des Aufliegers entspricht.

Die Erfindung wird nun mit Bezug auf die beigefügten Figuren genauer beschrieben, in denen
- Fig. 1: einen Sattelzug,
- Fig. 2: eine Steuervorrichtung für einen Auflieger, und
- Fig. 3: ein Ablaufdiagramm eines Verfahrens
darstellt.

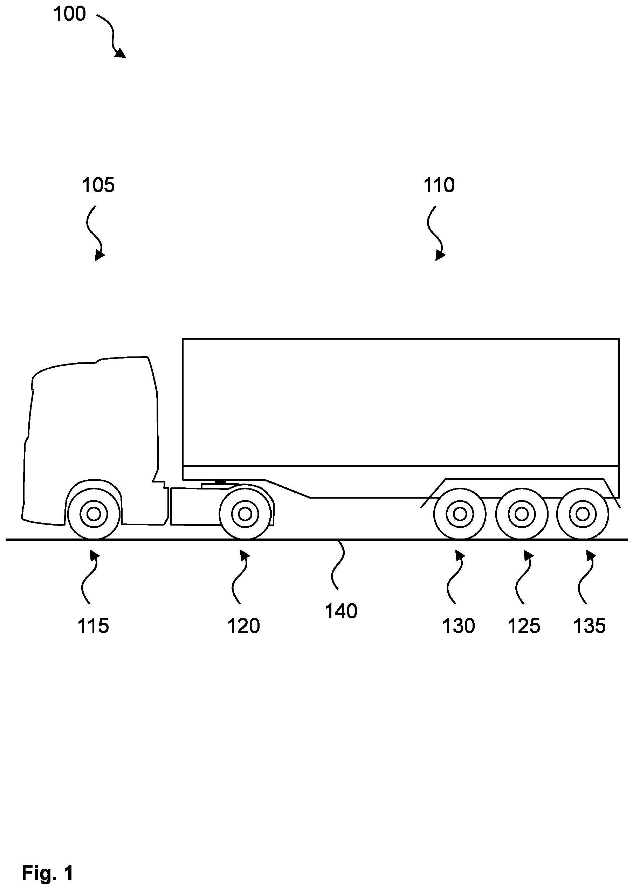

Fig. 1 zeigt einen Sattelzug 100, der eine Zugmaschine 105 und einen Auflieger 110 umfasst. Der Sattelzug 100 bzw. seine Komponenten 105, 110 sind insbesondere kommerzielle Fahrzeuge. Die Zugmaschine 105 umfasst in der dargestellten Ausführungsform eine gelenkte Achse 115 und eine Antriebsachse 120. Andere Konfigurationen sind ebenfalls möglich. Üblicherweise lastet ein Teil des Gewichts des angekoppelten Aufliegers 110 auf der Zugmaschine 105 im Bereich einer Antriebsachse 120.

Der Auflieger 110 kann zum Transport beliebiger Lasten eingerichtet sein. Er umfasst wenigstens eine erste Achse 125, die elektrisch angetrieben werden kann. In der dargestellten Ausführungsform sind zusätzlich eine optionale zweite Achse 130 und eine optionale dritte Achse 135 dargestellt. Die Anordnung der Achsen 125 bis 135 kann in anderen Ausführungsformen anders als dargestellt bzw. beschrieben sein. Üblicherweise ist wenigstens die erste Achse 125 an einem Ende des Aufliegers 110 angeordnet, das von demjenigen Ende, das auf der Zugmaschine 105 lastet, entfernt liegt.

Räder, die jeweils an den Achsen 115 bis 135 angebracht sind, lasten auf einem Untergrund 140. Eine Beschaffenheit des Untergrunds 140, beispielsweise bezüglich seiner Griffigkeit oder seiner Ebenheit, können eine Steuerung des Sattelzugs 100 beeinflussen. Insbesondere beim Anfahren des Sattelzugs 100 können Bedingungen vorliegen, die es erschweren, den Sattelzug 100 allein mittels Antriebsmoment der Antriebsachse 120 der Zugmaschine 105 zu kontrollieren.

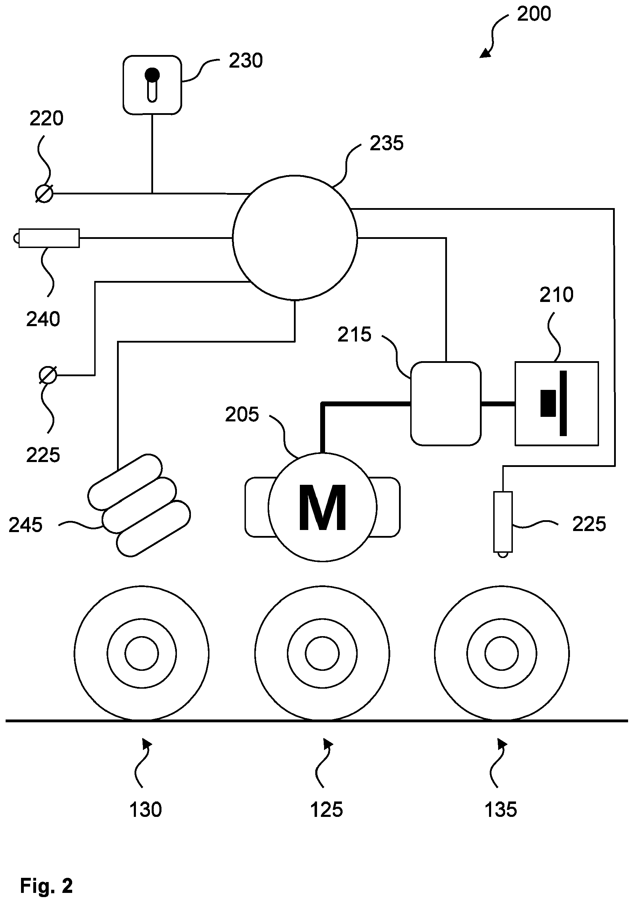

Fig. 2 zeigt eine schematische Darstellung einer Steuervorrichtung 200 für einen Auflieger 110. In einem unteren Bereich sind der Untergrund 140 sowie Räder der Achsen 125 bis 135 des Aufliegers 110 dargestellt. Eine Anzahl und Anordnung der Achsen 125 bis 135 ist beispielhaft wie in Fig. 1 gewählt. Eine Fahrtrichtung verläuft in Fig. 2 vorzugsweise nach links.

Der Auflieger 110 umfasst eine elektrische Antriebsmaschine 205, die auf ein Rad an der ersten Achse 125 wirkt. Zum Betrieb der Antriebsmaschine 205 kann eine elektrische Energiequelle 210 vorgesehen sein. Die Energiequelle 210 ist üblicherweise vom Auflieger 110 umfasst und kann beispielsweise einen elektrochemischen Energiespeicher, einen Stromgenerator, oder eine Brennstoffzelle umfassen. Eine Umsetzung elektrischer Energie von der Energiequelle 210 zur Antriebsmaschine 205 umfasst üblicherweise einen Stromrichter 215. Der Stromrichter 215 kann eine Drehzahl und/oder ein durch die elektrische Antriebsmaschine 205 bereitgestelltes Drehmoment steuern.

Die Antriebsmaschine 205 kann in einer Ausführungsform eine Vortriebskraft bzw. ein Antriebsmoment von ca. 10 - 15 kN bewirken, falls das Rad an der ersten Achse 125 ausreichenden Kontakt zum Untergrund 140 hat. Der Betrieb der Antriebsmaschine 205 kann technisch bis zu einer Fahrgeschwindigkeit von ca. 80 - 100 km/h möglich sein. Optional kann eine Traktionsunterstützung durch die Antriebsmaschine 205 aber auf eine geringere Fahrgeschwindigkeit begrenzt sein, beispielsweise aus rechtlichen Gründen.

In einer Ausführungsform wird die Antriebsmaschine 205 in Abhängigkeit einer auf die erste Achse 125 wirkende Achslast gesteuert, um ein Durchdrehen eines Rads an der ersten Achse 125 zu vermeiden. Die Achslast kann auf der Basis eines pneumatischen Drucks in einer Luftfederung zwischen der ersten Achse 125 und einem Chassis des Aufliegers 110 bestimmt werden.

Eine Standardschnittstelle 220 ist zur Verbindung des Aufliegers 110 mit der Zugmaschine 105 eingerichtet. Über die Standardschnittstelle 220 können vorbestimmte Signale übertragen werden. Die Standardschnittstelle 220 kann drahtgebunden ausgeführt sein und einen üblichen mehrpoligen Steckkontakt umfassen. Signale, die über die Standardschnittstelle 220 übermittelt werden, können insbesondere ein Fahrtrichtungssignal (Rückfahrsignal), ein Bremssignal und/oder ein VDC-Signal umfassen. Das VDC-Signal (vehicle dynamic control) kann aktiv sein, wenn mit einer Bremse in die Fahrdynamik des Sattelzugs 100 eingewirkt wird. Die Bremse kann vom Zugfahrzeug 105 oder vom Auflieger 110 umfasst sein. Das VDC-Signal kann von unterschiedlichen Systemen bereitgestellt werden, beispielsweise einem elektronischen Stabilitätsprogramm ESP oder einer Antriebsschlupfregelung ASR. Ein Signal kann über die Standardschnittstelle 220 auf einer dedizierten Leitung oder als Nachricht auf einem Datenbus übermittelt werden. Der Datenbus kann beispielsweise einen CAN- oder LIN-Bus umfassen.

Optional umfasst die Steuervorrichtung 200 noch eine weitere Schnittstelle 225, über die unabhängig von der Schnittstelle 220 Informationen zwischen der Zugmaschine 105 und dem Auflieger 110 übertragen werden können. Die weitere Schnittstelle 225 kann drahtlos oder drahtgebunden ausgeführt sein. In einer Ausführungsform ist ein am Auflieger 110 angebrachtes Bedienelement 230 vorgesehen, das mit der drahtgebundenen weiteren Schnittstelle 225 verbunden ist. Mittels des Bedienelements 230 kann ein Fahrerwunsch zur Bereitstellung einer Traktionsunterstützung mittels der Antriebsmaschine 205 bereitgestellt werden.

Insbesondere ist ein erster Sensor 235 vorgesehen, der dazu eingerichtet ist, eine Zugkraft zu bestimmen, die zwischen der Zugmaschine 105 und dem Auflieger 110 wirkt. Der erste Sensor 235 ist insbesondere im Bereich eines Königszapfens angebracht, der eine Zugkraft zwischen den Fahrzeugen 105, 110 übermittelt. In einer Ausführungsform werden Dehnungsmessstreifen dazu verwendet, eine mikroskopische Auslenkung des Königszapfens unter Einfluss der Zugkraft zu bestimmen. Ein Signal des Dehnungsmessstreifens kann verstärkt und weiterverarbeitet werden, um als Zugkraftsignal zu dienen.

Ein optionaler zweiter Sensor 240 ist dazu eingerichtet, eine Fahrgeschwindigkeit des Aufliegers 110 zu bestimmen. Der zweite Sensor 240 kann einen Drehzahlsensor umfassen, der an einem Rad des Aufliegers 110 angebracht ist, welches Kontakt zum Untergrund 140 hat. Es können auch mehrere zweite Sensoren 240 vorgesehen sein, die an verschiedenen Achsen des Aufliegers 110 angebracht sein können, insbesondere an der ersten Achse 125. Es kann auch ein zweiter Sensor 240 eingesetzt werden, der einen anderen Effekt ausnützt, um die Bewegung des Aufliegers 110 zu bestimmen, beispielsweise eine Kamera oder ein Beschleunigungssensor.

Ein Aktuator 245 kann dazu eingerichtet sein, eine Achse 130 des Aufliegers 110 vom Untergrund 140 abzuheben. Der Aktuator 245 kann einen Luftbalg umfassen, um eine entsprechende Hebekraft auszuüben. Ein weiterer Luftbalg, der zur Übertragung vertikaler Kräfte und zur Federung zwischen der zweiten Achse 130 und einem Chassis des Aufliegers 110 angebracht ist, kann gleichzeitig geleert bzw. drucklos gemacht werden. Eine Achse 130, die mittels eines Aktuators 245 vom Untergrund 140 abgehoben werden kann, kann auch Liftachse genannt werden.

Eine Liftachse kann alternativ vor oder hinter der mittels der Antriebsmaschine 205 antreibbaren Achse 125 angeordnet sein. Der zweite Sensor 240 kann auch auf ein Rad an einer Liftachse wirken, in diesem Fall kann die Liftachse jedoch nicht aktiviert werden, ohne das Geschwindigkeitssignal des zweiten Sensors 240 zu verlieren.

Eine Verarbeitungseinrichtung 250 ist dazu eingerichtet, über eine der Schnittstellen 220, 225 ein Signal zu erfassen, das auf einen Fahrerwunsch zur Bereitstellung einer Traktionsunterstützung hinweist und die elektrische Antriebsmaschine 205 sowie ggf. den Aktuator 245 anzusteuern. Dazu kann die Verarbeitungseinrichtung 250 auf den Stromrichter 215 wirken und die Bereitstellung elektrischer Energie an die Antriebsmaschine 205 steuern. Ferner wird vorgeschlagen, dass die Verarbeitungseinrichtung 250 dazu eingerichtet ist, die Traktionsunterstützung automatisch wieder zu deaktivieren, falls eine vorbestimmte Bedingung erfüllt ist.

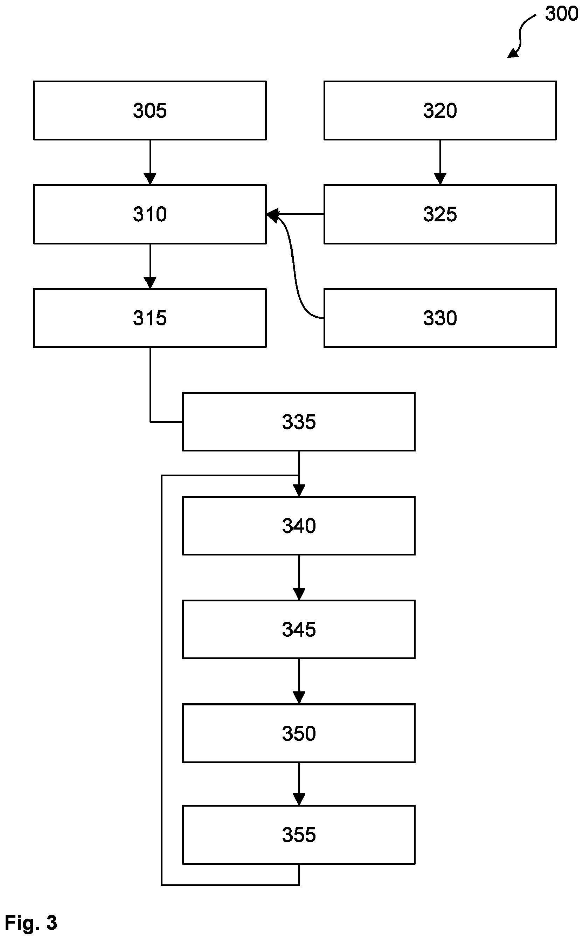

Fig. 3 zeigt ein Ablaufdiagramm eines beispielhaften Verfahrens 300 zur Steuerung eines Aufliegers 110. In einem Schritt 305 kann bestimmt werden, dass eine Feststellbremse des Aufliegers 110 aktiviert ist. Die Aktivierung kann auf der Basis eines Sensorsignals, eines pneumatischen Drucks in einem entsprechenden Abschnitt der Feststellbremse oder auf der Basis eines Steuersignals für die Feststellbremse bestimmt werden.

In einem Schritt 310 kann ein Signal erfasst werden, das auf einen Fahrerwunsch hinweist, eine Traktionsunterstützung durch die elektrisch Antriebsmaschine 205 zu aktivieren.

In einem Schritt 315 kann bestimmt werden, dass die Feststellbremse gelöst wird. Die Deaktivierung bzw. der deaktivierte Zustand kann ebenfalls auf der Basis eines Sensorsignals, eines pneumatischen Drucks in einem entsprechenden Abschnitt der Feststellbremse oder auf der Basis eines Steuersignals für die Feststellbremse bestimmt werden.

Es ist möglich, dass die Traktionsunterstützung erst aktiviert wird, wenn dieser dreischrittige Ablauf durchlaufen wurde. Dabei kann ein vorbestimmter zeitlicher Ablauf einzuhalten sein, um die Aktivierung zu ermöglichen. Beispielsweise ist es möglich, dass zwischen dem Bestimmen der Aktivierung im Schritt 305 und dem Bestimmen des Signals im Schritt 310 nicht mehr als eine vorbestimmte Zeit vergehen darf, um die Aktivierung zu ermöglichen. In ähnlicher Weise ist es möglich, dass zwischen dem Bestimmen des Signals im Schritt 310 und dem Bestimmen des Lösens der Feststellbremse im Schritt 315 nicht mehr als eine vorbestimmte Zeit vergehen darf, damit die Aktivierung stattfinden kann.

Das im Schritt 310 bestimmte Signal kann durch einen Fahrer des Zugfahrzeugs 105 oder eine sonstige Bedienperson erzeugt bzw. bereitgestellt werden. Dazu sind im Wesentlichen zwei verschiedene Varianten in Fig. 2 ausgeführt.

In einer ersten Variante kann der Fahrer oder die Person in einem Schritt 320 ein entsprechendes Bedienelement betätigen. Das Signal kann von dem Bedienelement bereitgestellt und über eine der Schnittstellen 220, 225 übermittelt werden. Das Bedienelement kann sich an der Zugmaschine 105 befinden, insbesondere im Bereich eines Fahrerplatzes, den der Fahrer einnehmen kann, um die Zugmaschine 105 bzw. den Sattelzug 100 zu steuern.

Ein Bedienelement 230 kann auch fest am Auflieger 110 angebracht sein, in diesem Fall wird das Signal insbesondere mittels einer drahtgebundenen Schnittstelle 215 übermittelt.

Weiter alternativ kann das Signal von einem drahtlosen Gerät wie einem Mobilgerät oder einer Fernbedienung bereitgestellt und drahtlos an die weitere Schnittstelle 215 übermittelt werden. Es ist zu beachten, dass im Fall eines dedizierten Bedienelements optional auf eine Einbettung des Signals in den Ablauf der Schritte 305 und 315 verzichtet werden kann. Eine Betätigung des Bedienelements kann dann unmittelbar zu einer Aktivierung der Traktionsunterstützung führen.

In einer zweiten Variante kann der Fahrer ein vorbestimmtes Bedienelement der Zugmaschine 105 betätigen, wodurch ein Signal an den Auflieger übermittelt wird, das zunächst nur dem Bedienelement und nicht einer Traktionsunterstützung mittels der elektrischen Antriebsmaschine 205 zugeordnet ist. Das Bedienelement kann beispielsweise ein Bremspedal einer Betriebsbremse oder ein Aktivierungselement eines Retarders umfassen, die jeweils das Übermitteln eines Bremssignals an den Auflieger 110 über die Schnittstelle 220 bewirken. Erfüllt das Signal bestimmte Eigenschaften, so kann bestimmt werden, dass es über seine ursprüngliche Bedeutung hinaus auf einen Fahrerwunsch nach einer Traktionsunterstützung hinweist. Diese Eigenschaften können eine vorbestimmte Randbedingung umfassen, beispielsweise, dass eine Fahrgeschwindigkeit der Zugmaschine 105 und/oder des Aufliegers 110 unter einem vorbestimmten Schwellenwert liegt, oder das Signal kann einer vorbestimmten Sequenz folgen, beispielsweise drei separate Betätigungen innerhalb von drei Sekunden.

In einem Schritt 335 kann auf der Basis des an den Auflieger 110 übermittelten Signals ein Fahrerwunsch nach Traktionsunterstützung bestimmt werden. Dazu kann bestimmt werden, ob das im Schritt 310 bestimmte Signal korrekt in einen vorbestimmten Ablauf eingebunden ist, der hier durch die Schritte 305 und 310 gegeben ist.

Ist dies der Fall, so kann im Schritt 340 die Traktionsunterstützung bereitgestellt werden. Dazu kann die elektrische Antriebsmaschine 205 mittels des Stromrichters 215 derart angesteuert werden, dass sie ein Drehmoment am zugeordneten Rad anlegt, um den Auflieger 110 in Fahrtrichtung anzutreiben. In diesem Schritt kann auch ein Aktuator 245 angesteuert werden, um eine Liftachse 130 des Aufliegers 110 anzuheben, sodass eine Achslast auf die angetriebene Achse 125 erhöht ist.

Die Traktionsunterstützung kann in Abhängigkeit eines oder mehrerer bestimmter Parameter automatisch gesteuert werden. So kann in einem Schritt 345 eine Zugkraft bestimmt werden, die zwischen der Zugmaschine 105 und dem Auflieger 110 wirkt. In einem Schritt 350 kann eine Fahrgeschwindigkeit des Aufliegers 110 oder der Zugmaschine 105 bestimmt werden.

In einem Schritt 355 kann bestimmt werden, ob einer der Parameter oder eine Kombination mehrerer Parameter eine vorbestimmte Bedingung erfüllen, die zum Abbruch bzw. zur Deaktivierung der Traktionsunterstützung führen. In diesem Fall kann die Ansteuerung der elektrischen Antriebsmaschine 205 beendet werden. Beispielsweise kann die Unterstützung deaktiviert werden, wenn die Zugkraft einen vorbestimmten Schwellenwert übersteigt oder wenn die Fahrgeschwindigkeit einen weiteren vorbestimmten Schwellenwert übersteigt. Die Traktionsunterstützung kann beispielsweise auch beendet werden, wenn die Unterstützung länger als eine vorbestimmte Dauer gesteuert wurde. Ein weiterer Grund für eine Deaktivierung der Traktionsunterstützung kann vorliegen, wenn der Fahrerwunsch nicht mehr vorliegt. Dies kann etwa der Fall sein, wenn der Fahrer die Feststellbremse oder eine Betriebsbremse aktiviert, wenn das dedizierte Signal im Schritt 325 nicht mehr bereitgestellt wird oder wenn ein anderes Signal bereitgestellt wird, welches auf einen Fahrerwunsch hinweist, die Traktionsunterstützung einzustellen.

Ein Betrag der Traktionsunterstützung kann in Abhängigkeit einer Achslast auf der Achse 125 gesteuert werden, an dem das mittels der elektrischen Antriebsmaschine 205 angetriebene Rad angebracht ist. Eine Steuerung des Betrags in Abhängigkeit eines anderen Parameters, beispielsweise der Zugkraft oder der Fahrgeschwindigkeit, ist ebenfalls möglich. Bevorzugt wird die Traktionsunterstützung systematisch verringert, wenn die Zugkraft oder die Fahrgeschwindigkeit ansteigt.

Ist die vorbestimmte Abbruchbedingung im Schritt 355 nicht erfüllt, so kann beispielsweise zum Schritt 340 zurückgekehrt werden.

### Bezugszeichenliste (als Teil der Beschreibung)

- 100: Sattelzug
- 105: Zugmaschine
- 110: Auflieger
- 115: gelenkte Achse
- 120: Antriebsachse
- 125: erste Achse
- 130: zweite Achse
- 135: dritte Achse
- 140: Untergrund

- 200: Steuervorrichtung
- 205: elektrische Antriebsmaschine
- 210: Energiequelle
- 215: Stromrichter
- 220: Schnittstelle
- 225: weitere Schnittstelle
- 230: Bedienelement
- 235: erster Sensor
- 240: zweiter Sensor
- 245: Aktuator
- 250: Verarbeitungseinrichtung

- 300: Verfahren
- 305: aktivierte Feststellbremse erfassen
- 310: Signal erfassen
- 315: deaktivierte Feststellbremse erfassen
- 320: Fahrer betätigt Bedienelement
- 325: Signal erzeugen
- 330: Fahrer betätigt Fahrelement
- 335: Fahrerwunsch bestimmen
- 340: Traktionsunterstützung bereitstellen
- 345: Zugkraft bestimmen
- 350: Fahrgeschwindigkeit bestimmen
- 355: Abbruch?

## Patentansprüche

1. Steuervorrichtung (200) für einen Auflieger (110), der dazu eingerichtet ist, von einer Zugmaschine (105) gezogen zu werden, wobei der Auflieger (110) ein Rad und eine elektrische Antriebsmaschine (205) zur Bereitstellung eines Antriebsmoments an dem Rad umfasst,
wobei die Steuervorrichtung (200) eine Schnittstelle (220, 225) zur Verbindung mit der Zugmaschine (105) umfasst und dazu eingerichtet ist:
- auf der Basis eines über die Schnittstelle (220, 225) übertragenen Signals einen Fahrerwunsch zur Traktionsunterstützung zu bestimmen und
- die Antriebsmaschine (205) in Abhängigkeit des Fahrerwunschs zu steuern.

2. Steuervorrichtung (200) nach Anspruch 1, wobei bestimmt wird, dass während der Übertragung des Signals eine Feststellbremse des Aufliegers (110) aktiviert ist.

3. Steuervorrichtung (200) nach Anspruch 2, wobei die Traktionsunterstützung erst gesteuert wird, wenn die Feststellbremse gelöst wird.

4. Steuervorrichtung (200) nach einem der vorangehenden Ansprüche, wobei die Schnittstelle (220, 225) ein Bremssignal übermittelt und der Fahrerwunsch auf Basis einer vorbestimmten Sequenz des Bremssignals bestimmt wird.

5. Steuervorrichtung (200) nach Anspruch 4, wobei die Schnittstelle (220, 225) drahtgebunden ist

6. Steuervorrichtung (200) einem der vorangehenden Ansprüche, wobei die Schnittstelle (225) separat von einer Standardschnittstelle zwischen der Zugmaschine (105) und dem Auflieger (110) ausgeführt ist.

7. Steuervorrichtung (200) nach einem der vorangehenden Ansprüche, wobei die Traktionsunterstützung in Abhängigkeit einer zwischen der Zugmaschine (105) und dem Auflieger (110) wirkenden Zugkraft gesteuert (340) wird.

8. Auflieger (110), umfassend eine Steuervorrichtung (200) nach einem der vorangehenden Ansprüche.

9. Zugmaschine (105), die dazu eingerichtet ist, einen Auflieger (110), insbesondere einen Auflieger nach Anspruch 8, zu ziehen, der ein Rad umfasst, an dem mittels einer elektrischen Antriebsmaschine (205) ein Antriebsmoment bereitgestellt werden kann, wobei die Zugmaschine (105) ein dediziertes Bedienelement (230) zur Bereitstellung eines Signals umfasst, das auf einen Fahrerwunsch nach Traktionsunterstützung mittels der elektrischen Antriebsmaschine (205) hinweist.

10. Sattelzug (100), umfassend einen Auflieger (110) nach Anspruch 8 und eine Zugmaschine (105), insbesondere eine Zugmaschine nach Anspruch 9, die dazu eingerichtet ist, den Auflieger (110) zu ziehen.

11. Verfahren (300) zum Steuern eines Aufliegers (110), der dazu eingerichtet ist, von einer Zugmaschine (105) gezogen zu werden, wobei der Auflieger (110) ein Rad und eine elektrische Antriebsmaschine (205) zur Bereitstellung eines Antriebsmoments an dem Rad umfasst, wobei das Verfahren (300) folgende Schritte umfasst:
- Bestimmen (310) eines über eine Schnittstelle (220, 225) von der Zugmaschine (105) an den Auflieger (110) übermittelten Signals,
- Bestimmen (335) eines Fahrerwunschs zur Traktionsunterstützung auf der Basis des Signals und
- Steuern (340) der Antriebsmaschine (205) in Abhängigkeit des Fahrerwunschs.

12. Verfahren (300) nach Anspruch 11, wobei die Traktionsunterstützung in Abhängigkeit einer Achslast an einer das Rad tragenden Achse bereitgestellt (340) wird.

13. Verfahren (300) nach einem der Ansprüche 11 oder 12, wobei zur Traktionsunterstützung eine Liftachse des Aufliegers (110) aktiviert (335) wird.

14. Verfahren (300) nach einem der Ansprüche 11 bis 13, wobei die Traktionsunterstützung beendet (355) wird, falls eine vorbestimmte Unterstützungsdauer abläuft, eine Fahrgeschwindigkeit einen vorbestimmten Schwellenwert erreicht, eine Antriebsschlupfregelung der Zugmaschine (105) deaktiviert wird und/oder ein fahrergesteuerter Bremsdruck einen vorbestimmten Schwellenwert erreicht.
